# EUROPÄISCHE PATENTSCHRIFT

(11) **EP 3 211 873 B1**
(45) Veröffentlichungstag und Bekanntmachung des Hinweises auf die Patenterteilung: **23.10.2019**
(21) Anmeldenummer: 16199080.9
(22) Anmeldetag: 16.11.2016
(51) Int. Cl.: H04M 3/42

(54) **VERFAHREN ZUM ANRUFAUFBAU**
METHOD FOR ESTABLISHING A CALL
PROCÉDÉ D'ÉTABLISSEMENT D'UN APPEL

(30) Priorität: 29.02.2016 EP 16157768
(43) Veröffentlichungstag der Anmeldung: 30.08.2017
(73) Patentinhaber: EBE-EDV-Beratungs-und Entwicklungs-Gesm.b.H., 1010 Wien (AT)
(72) Erfinder: WALTER, Michael, 1010 Wien (AT)
(74) Vertreter: Weiser & Voith Patentanwälte Partnerschaft

(56) Entgegenhaltungen:
- WO-A2-03/024074
- GB-A- 2 454 886
- US-A1- 2007 064 895
- US-A1- 2007 105 531
- US-B1- 8 693 655

## Beschreibung

Die vorliegende Erfindung betrifft ein Verfahren zum Anrufaufbau von einem Teilnehmer zu einer Mobilstation, die durch eine Rufnummer in einem Mobilfunknetz identifiziert ist.

In der vorliegenden Beschreibung wird unter dem Begriff "Verbindung" oder "Anruf" sowohl eine übliche Sprachverbindung als auch eine bloße Signalisierungsverbindung im Rahmen eines Kurznachrichtendiensts (Short Message Service, SMS) von und zu einer Mobilstation verstanden, insbesondere nach einem 2G-, 3G-, 4G-, 5G-Standard oder höher, wie GSM, UMTS, LTE usw.

Rufnummern in Mobilfunknetzen werden in zunehmenden Maße zur Identifizierung von Personen verwendet, sei es in Adressverzeichnissen, auf Visitenkarten, in Inseraten usw. oder als Bestandteil von Login- oder Transaktionsdaten für Internetdienste, bei denen eine Zugangs- oder Transaktionsberechtigung durch Rücksenden eines Passworts an ein durch die Rufnummern identifiziertes Mobiltelefon des Benutzers gesandt wird, um erhöhte Sicherheit der Benutzerauthentifizierung zu gewährleisten. Durch solche neuartigen Verwendungen von Mobiltelefon-Rufnummern werden diese jedoch in zunehmenden Maß der Öffentlichkeit preisgegeben, und der Benutzer hat letztlich keinen Überblick oder Einfluss mehr darauf, welche Systeme oder Adressaten Kenntnis von seiner persönlichen Rufnummer erlangen. Dies läuft nicht nur dem Bedürfnis nach Datenschutz zuwider, sondern hält viele Benutzer auch davon ab, nutzbringende Internetdienste, die auf einer erhöhten Authentifizierungssicherheit durch Rückbestätigung an ein Mobiltelefon beruhen, zu verwenden, um seine Rufnummer zu schützen.

Die Schriften GB 2 454 886 A, US 2007/0064895 A1 und WO 03/024074 A2 zeigen jeweils ein Verfahren zum Verwenden von anonymen Rufnummern. Dazu ist im Heimatnetzwerk eines Mobilfunkteilnehmers eine Zuordnungsdatenbank implementiert, um die in diesem Mobilfunknetzwerk vergebene Rufnummer des Mobilfunkteilnehmers durch eine anonyme Rufnummer zu ersetzen. Anonyme Rufnummern sind daher nur für Mobilfunkteilnehmer verfügbar, deren Heimatnetzwerk eine derartige Zuordnungsdatenbank implementiert hat.

Die Erfindung setzt sich zum Ziel, diese Nachteile zu überwinden und Anrufverfahren für Teilnehmer von Mobilfunknetzen zu schaffen, welche deren Rufnummern in verbesserter Weise schützen.

Dieses Ziel wird gemäß einem ersten Aspekt der Erfindung mit einem Verfahren zum Anrufaufbau von einem Teilnehmer, der eine erste Anruferkennung hat, zu einer Mobilstation, an die eine erste Rufnummer in einem ersten Mobilfunknetz vergeben ist, erreicht, welches Verfahren umfasst:
Speichern einer ersten Zuordnung zwischen der ersten Rufnummer und einer in einem zweiten Mobilfunknetz vergebenen zweiten Rufnummer in einem Serviceknoten des zweiten Mobilfunknetzes;
Entgegennehmen eines ersten Anrufs, welcher an die zweite Rufnummer gerichtet ist und die erste Anruferkennung enthält, im zweiten Mobilfunknetz;
falls der ersten Anruferkennung noch keine Reserve-Rufnummer im Serviceknoten zugeordnet ist, Zuordnen einer noch unzugeordneten Reserve-Rufnummer aus einem Pool von Reserve-Rufnummern des zweiten Mobilfunknetzes zu der ersten Anruferkennung und Speichern dieser Zuordnung als zweite Zuordnung zu der ersten Zuordnung im Serviceknoten;
Erzeugen einer zweiten Anruferkennung umfassend die der ersten Anruferkennung zugeordnete Reserve-Rufnummer;
Ermitteln der der zweiten Rufnummer zugeordneten ersten Rufnummer aus der gespeicherten ersten Zuordnung; und
Aufbauen eines zweiten Anrufs vom zweiten Mobilfunknetz oder einem weiteren Mobilfunk- oder Festnetz zu der durch die erste Rufnummer adressierten Mobilstation und Durchschalten des ersten Anrufs zum zweiten Anruf, wobei die zweite Anruferkennung im zweiten Anruf mitübermittelt wird.

Die Erfindung schafft damit gleichsam eine "Firewall" für den Benutzer der Mobilstation im ersten Mobilfunknetz durch "Zwischenschaltung" eines zweiten Mobilfunknetzes, in welchem dem Teilnehmer eine zweite, "virtuelle" Rufnummer zugeordnet wird. Die zweite, virtuelle Rufnummer kann vom Benutzer bedenkenlos weitergegeben werden, ohne dass dadurch seine persönliche, erste Rufnummer der Öffentlichkeit preisgegeben wird. Der Benutzer kann die zweite, virtuelle Rufnummer beispielsweise als Telefonkontakt in öffentlichen Inseraten oder im Rahmen von Login- oder Transaktionsdaten von Internetdiensten verwenden, welche z.B. Bestätigungs-SMS mit Passwörtern oder Transaktionscodes über das Mobilfunknetz rücksenden, und gleichzeitig seine persönliche, erste Rufnummer vor Veröffentlichung schützen.

Bei dem erfindungsgemäßen Anrufaufbau zu der zweiten, virtuellen Rufnummer wird diese vom Serviceknoten des zweiten Mobilfunknetzes in die persönliche erste Rufnummer übersetzt, wobei an die angerufene Mobilstation gleichzeitig eine neue ("zweite") Anruferkennung übermittelt wird, die eine der ursprünglichen ("ersten") Anruferkennung des rufenden Teilnehmers eindeutig zugeordnete Rufnummer ("Reserve-Rufnummer") aus dem zweiten Mobilfunknetz enthält. Anhand der in der Reserve-Rufnummer, welche als zweite Anruferkennung übermittelt wird, enthaltenen Netzvorwahl des zweiten Mobilfunknetzes kann der angerufene Benutzer nun erkennen, dass der Anruf nicht seiner persönlichen Rufnummer, sondern seiner virtuellen Rufnummer gilt. Der angerufene Benutzer kann so beispielsweise entscheiden, ob er den an seine virtuelle Rufnummer gerichteten Anruf entgegennimmt oder nicht. Das Verfahren der Erfindung bietet dadurch nicht nur Vertraulichkeit und Datenschutz, sondern auch Zusatzinformation über den rufenden Teilnehmer, nämlich, ob dieser die persönliche oder die virtuelle Rufnummer gewählt hat und damit zu welchem privaten oder öffentlichen Bekanntenkreis dieser gehört.

Die Verwendung einer die Netzvorwahl des zweiten Mobilfunknetzes enthaltenden Reserve-Rufnummer als Anruferkennung im zweiten Anruf ermöglicht dabei in weiterer Folge auch einen datengeschützten Rückruf von der Mobilstation aus mit einer bloß diese Anruferkennung enthaltenden Zielrufnummer, was auch in solchen Telefonnetzen funktioniert, die technischen Beschränkungen hinsichtlich der maximalen Stellenzahl der für Anrufe verwendbaren Zielrufnummern unterliegen.

Eine entsprechend programmierte Mobilstation kann die in der zweiten Anruferkennung mitempfangene Netzvorwahl des zweiten Mobilfunknetzes auch automatisch detektieren und dem Benutzer bei der Signalisierung des ankommenden Anrufs den Umstand der Verwendung der virtuellen Rufnummern auch besonders deutlich anzeigen, z.B. auf dem Display oder mit einem speziellen Klingelton der Mobilstation.

Der vom Serviceknoten veranlasste zweite Anruf kann dabei über das zweite Mobilfunknetz selbst oder über ein anderes Mobilfunk- oder Festnetz aufgebaut werden, mit welchem der Serviceknoten in Verbindung steht.

Eine besonders vorteilhafte Weiterbildung des erfindungsgemäßen Verfahrens umfasst ferner:
Speichern zumindest einer weiteren ersten Zuordnung zwischen jeweils der ersten Rufnummer und einer im zweiten Mobilfunknetz vergebenen weiteren zweiten Rufnummer im Serviceknoten, wobei für jede gespeicherte erste Zuordnung eine Zuordnungskennung vergeben wird;
wobei die zweite Anruferkennung auch die Zuordnungskennung umfasst.

Der Benutzer der Mobilstation kann dadurch gleich mehrere verschiedene virtuelle (zweite) Rufnummern verwenden und an unterschiedliche Kreise der Öffentlichkeit ausgeben, beispielsweise für unterschiedliche Bekanntenkreise, unterschiedliche Websites, unterschiedliche Inserate usw. An der Mobilstation kann dann anhand der Anruferkennung, welche nun auch die Zuordnungskennung für die jeweilige angerufene virtuelle Rufnummer mitenthält, nicht nur erkannt werden, ob der Anrufer die persönliche oder virtuelle Rufnummer gewählt hat, sondern auch *welche* der mehreren virtuellen Rufnummern der Anrufer verwendet hat. Dadurch erhält der angerufene Benutzer weitere Informationen über den Öffentlichkeitskreis, aus dem der Anrufer kommt, und kann noch genauer und selektiver entscheiden, ob er den Anruf entgegennimmt oder nicht.

Es versteht sich dabei, dass die Zuordnungskennung auch als Teil, z.B. als letzte Ziffer(n), der als zweite Anruferkennung übermittelteten Reserve-Rufnummer aufgefasst werden oder definiert sein kann. Mit anderen Worten können z.B. für unterschiedliche virtuelle Rufnummern der Mobilstation unterschiedliche Pools von Reserve-Rufnummern im zweiten Mobilfunknetz verwendet werden. Auch diese Ausführungsform fällt unter die Definition, dass die zweite Anruferkennung auch die Zuordnungskennung umfasst, nämlich in diesem Fall in Form einer zuordnungsspezifischen Reserve-Rufnummer.

Das erfindungsgemäße Verfahren lässt sich besonders einfach implementieren, wenn der an die zweite Rufnummer gerichtete erste Anruf anhand der Netzvorwahl des zweiten Mobilfunknetzes erkannt und zu diesem geleitet wird, wo er an einem Anschluss des zweiten Mobilfunknetzes entgegengenommen und von dort zum zweiten Anruf durchgeschaltet wird. Dadurch genügt eine herkömmliche Verkehrsausscheidung aufgrund der Netzvorwahl, um den an die zweite Rufnummer gerichteten Anruf zum zweiten Mobilfunknetz zu leiten.

Alternativ kann die zumindest eine virtuelle (zweite) Rufnummer im gesamten Telefonnetz und allen daran angeschlossenen Mobilfunknetzen publiziert werden, indem sie in das Heimatortsregister (Home Location Register, HLR) des zweiten Mobilfunknetzes eingetragen wird, falls gewünscht.

Im Rahmen des erfindungsgemäßen Verfahrens können bevorzugt auch verschiedenste Anruf-Filterfunktionen im Serviceknoten zu Gunsten des Benutzers der Mobilstation durchgeführt werden. Dazu wird bevorzugt der zweite Anruf nur dann aufgebaut und der erste Anruf nur dann zum zweiten Anruf durchgeschaltet, wenn die erste Anruferkennung in einer Zulassungsliste ("whitelist") enthalten oder in einer Sperrliste ("blacklist") nicht enthalten ist, die im Serviceknoten zur ersten Rufnummer gespeichert ist. Dadurch kann der Benutzer der Mobilstation vor unerwünschten Anrufen bewahrt werden ("blacklisting") bzw. es werden nur gewünschte Anrufe durchgestellt ("whitelisting").

In dem Fall, dass der Benutzer der Mobilstation über mehrere virtuelle Rufnummern verfügt, kann in diesem Sinne der zweite Anruf auch nur dann aufgebaut und der erste Anruf nur dann durchgeschaltet werden, wenn die erste Anruferkennung in einer solchen Zulassungsliste enthalten oder in einer solchen Sperrliste nicht enthalten ist, die im Serviceknoten zur ersten Rufnummer gespeichert ist.

Das Verfahren der Erfindung ermöglicht auch jederzeit einen Rückruf von der an der virtuellen Rufnummer angerufenen Mobilstation zum ursprünglichen Anrufer, weil dessen Anruferkennung nicht verloren geht. Die Erfindung betrifft somit in einem zweiten Aspekt auch ein Verfahren zum Rückrufen des Teilnehmers von der Mobilstation aus, d.h. im Anschluss an ein Anrufverfahren gemäß dem ersten Aspekt der Erfindung, umfassend:
Entgegennehmen eines dritten Anrufs, welcher die zweite Anruferkennung als Zielrufnummer und die erste Rufnummer als dritte Anruferkennung enthält, im zweiten Mobilfunknetz;
Extrahieren der Reserve-Rufnummer aus der Zielrufnummer;
Ermitteln der der Reserve-Rufnummer zugeordneten ersten Anruferkennung aus der gespeicherten zweiten Zuordnung jener ersten Zuordnung, welche die erste Rufnummer enthält;
Aufbauen eines vierten Anrufs vom zweiten Mobilfunknetz oder einem weiteren Mobilfunk- oder Festnetz zu dem durch die ermittelte erste Anruferkennung adressierten Teilnehmer und Durchschalten des dritten Anrufs zum vierten Anruf.

Bevorzugt umfasst das Verfahren dabei auch das Ermitteln der der ersten Rufnummer zugeordneten zweiten Rufnummer aus der im Serviceknoten gespeicherten ersten Zuordnung und Erzeugen einer vierten Anruferkennung umfassend die ermittelte zweite Rufnummer; wobei die vierte Anruferkennung im vierten Anruf mitübermittelt wird.

Dadurch erhält der rückgerufene Teilnehmer als Anruferkennung wieder die virtuelle, zweite Rufnummer des Benutzers der Mobilstation, und dessen persönliche, erste Rufnummer bleibt verborgen und geschützt. Der rückgerufene Teilnehmer sieht nur die von ihm ursprünglich angerufene virtuelle Rufnummer und erkennt dies als normalen Rückruf des Benutzers der Mobilstation.

In jener Ausführungsform des Anrufverfahrens gemäß dem ersten Aspekt der Erfindung, in welcher mehrere virtuelle Rufnummern im zweiten Mobilfunknetz zugeordnet sind und an jede erste Zuordnung eine Zuordnungskennung vergeben ist, zeichnet sich eine bevorzugte Ausführungsform des Rückrufverfahrens dadurch aus, dass
beim Extrahieren auch die Zuordnungskennung aus der Zielrufnummer extrahiert wird; und
beim Erzeugen der vierten Anruferkennung die der ersten Rufnummer zugeordnete zweite Rufnummer anhand der durch die extrahierte Zuordnungskennung angegebenen ersten Zuordnung ermittelt wird.

Auch hier wird wieder beim Rückruf genau die vom ursprünglichen Anrufer verwendete virtuelle Rufnummer als Anruferkennung des Rückrufers signalisiert, so dass der Rückruf für den Rückgerufenen konsistent und transparent erscheint, ohne dass die persönliche Rufnummer des Benutzers der Mobilstationen publik wird.

Es versteht sich, dass, wenn die Zuordnungskennung in die Reserve-Rufnummer "integriert" war, z.B. ein zuordnungsspezifischer Pool von Reserve-Rufnummern verwendet worden war, die Schritte des Extrahierens der Zuordnungskennung aus der Zielrufnummer und des Ermittelns der dadurch angegebenen zweiten Rufnummer dann einfach das Heraussuchen ebenjener ersten Zuordnung bedeuten, für welche der jeweilige Pool von Reserve-Rufnummern verwendet worden war; auch diese Ausführungsform ist von der Definition "Extrahieren der Zuordnungskennung aus der Zielrufnummer" und "Ermitteln der zweiten Rufnummer anhand der durch die extrahierte Zuordnungskennung angegebenen ersten Zuordnung" mitumfasst.

Beim Rückrufen des Teilnehmers von der Mobilstation aus kann der an die zweite Anruferkennung als Zielrufnummer gerichtete dritte Anruf der Mobilstation anhand der in der Reserve-Rufnummer enthaltenen Netzvorwahl des zweiten Mobilfunknetzes erkannt und zu diesem geleitet werden, wo er an einem Anschluss des zweiten Mobilfunknetzes entgegengenommen und von dort zum vierten Anruf durchgeschaltet wird, so dass dafür lediglich eine Verkehrsauscheidung anhand der Netzvorwahl des zweiten Mobilfunknetzes genügt.

Gemäß einer weiteren bevorzugten Ausführungsform der Erfindung werden die im Serviceknoten für eine erste Zuordnung gespeicherten zweiten Zuordnungen über eine Datenverbindung an die Mobilstation gesandt und dort in einem Speicher der Mobilstation gespeichert. Dadurch kann beispielsweise eine entsprechend programmierte Applikation in der Mobilstation die automatische Übersetzung einer als Anruferkennung enthaltenen Reserve-Rufnummer in die ursprüngliche Anruferkennung des anrufenden Teilnehmers durchführen.

Eine vorteilhafte Anwendung dieser Ausführungsform umfasst bevorzugt:
Extrahieren der Reserve-Rufnummer aus der in einem zweiten Anruf mitübermittelten zweiten Anruferkennung in der Mobilstation;
Ermitteln der der extrahierten Reserve-Rufnummer in einer zweiten Zuordnung zugeordneten ersten Anruferkennung aus dem Speicher; und
Anzeigen der ersten Anruferkennung in der Mobilstation.

Das Verfahren wird dadurch auch für den Benutzer der Mobilstation transparent, da er nun auch Information über die "echte", ursprüngliche Anruferkennung des Anrufers erhält. Dazu wird bevorzugt ein ständiger Abgleich der im Serviceknoten gespeicherten zweiten Zuordnungen zwischen ursprünglichen Anruferkennungen und Reserve-Rufnummern einerseits mit einer Kopie dieser zweiten Zuordnungen im Speicher der Mobilstation anderseits über die genannte Datenverbindung durchgeführt. Die Datenverbindung kann beispielsweise eine mobile Internetverbindung der Mobilstation sein, die sie zu dem Serviceknoten - unabhängig von den beschriebenen Anrufen im Telefonnetz - im Hintergrund unterhält, beispielsweise über eine 3G-, 4G- oder 5G-Datenverbindung.

Bei der zumindest einen virtuellen zweiten Rufnummern kann es sich jeweils sowohl um eine direkt im zweiten Mobilfunknetz vergebene Rufnummer handeln als auch um eine solche Rufnummer, die aus einem anderen Mobilfunknetz in das zweite Mobilfunknetz rufnummernportiert worden ist. Es versteht sich, dass eine derartige Rufnummerportierung bedeutet, dass diese virtuelle zweite Rufnummer im HLR des anderen Mobilfunknetzes, aus dem portiert wurde, als portierte Rufnummer eingetragen werden muss, wie es z.B. im Falle eines GSM-Netzes in den entsprechenden ETSI-Standards über die Rufnummernportierung definiert ist.

In jeder der beschriebenen Varianten des Verfahrens kann das zweite Mobilfunknetz ein herkömmliches, hardwarebasiertes Mobilfunknetz ("Mobile Network Operator", MNO) sein, oder alternativ als "Mobile Virtual Network Operator" (MVNO) in einem dritten, hardwarebasierten MNO-Mobilfunknetz virtualisiert sein.

Die Erfindung wird nachstehend anhand von in den beigeschlossenen Zeichnungen dargestellten Ausführungsbeispielen näher erläutert, in welchen zeigen:
die Fig. 1 und 2 die Verfahren gemäß der Erfindung anhand eines Rufaufbaus von einem rufenden Teilnehmer zu einer angerufenen Mobilstation (Fig. 1) und in umgekehrter Richtung als Rückruf (Fig. 2), jeweils in Form eines schematischen Blockschaltbilds mit eingezeichneten Rufaufbau-Signalflüssen;
die Fig. 3 und 4 jeweils Varianten der Verfahren der Fig. 1 und 2 in derselben Darstellungsweise; und
Fig. 5 weitere Varianten der Verfahren der Fig. 1 bis 4 in derselben Darstellungsweise.

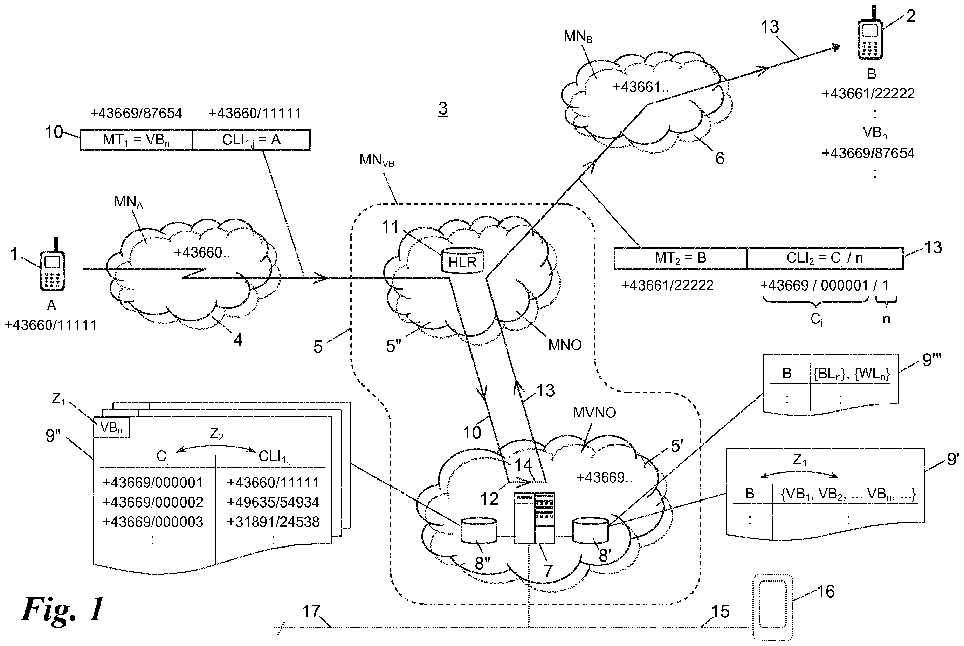

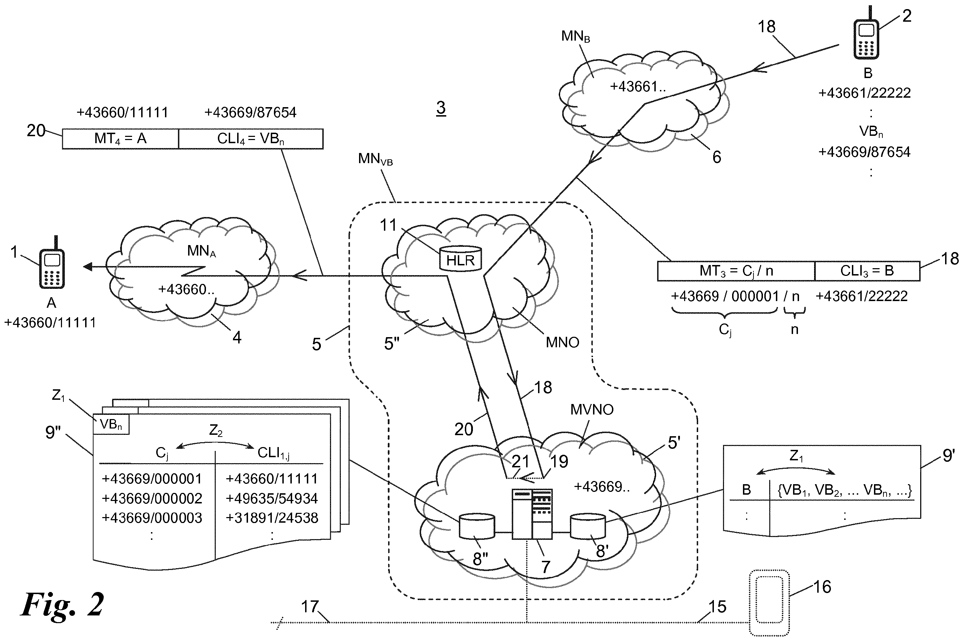

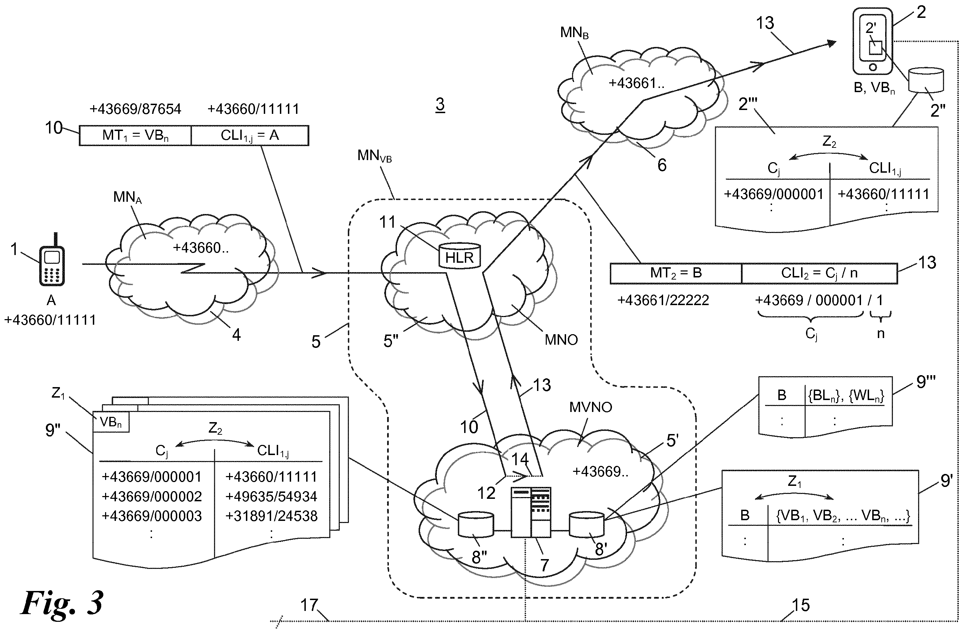

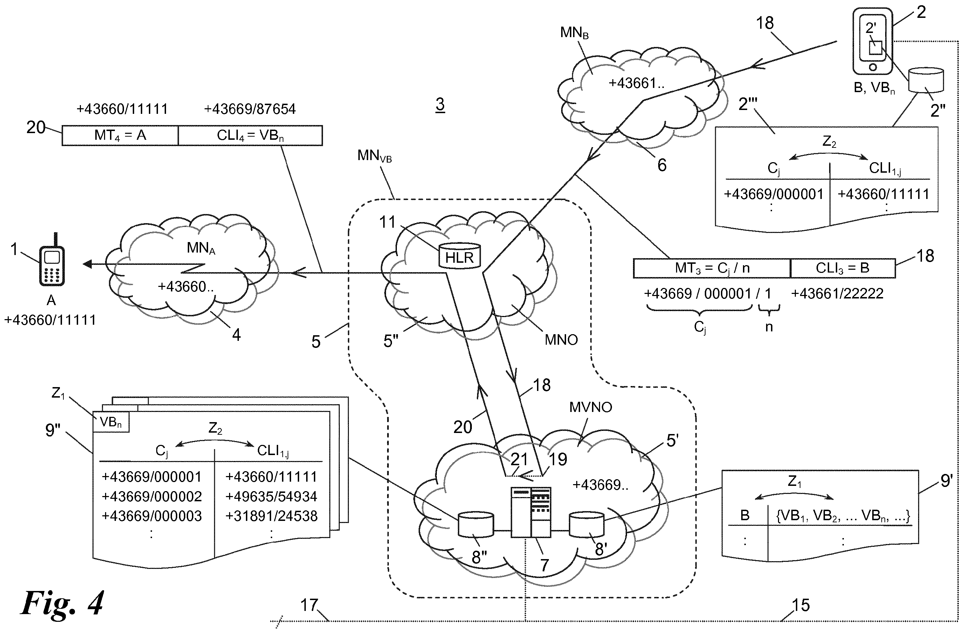

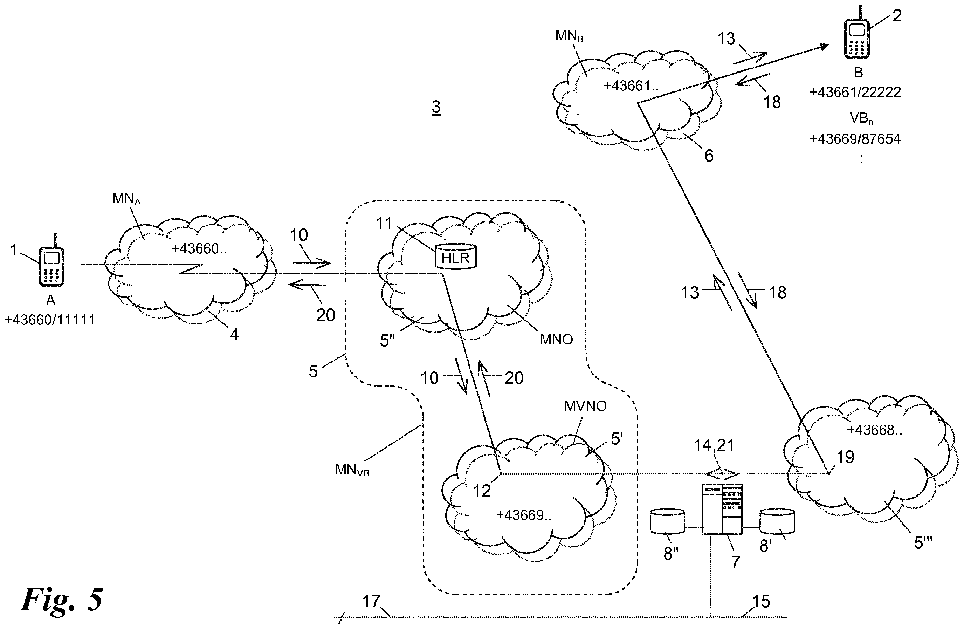

Die Fig. 1 bis 5 zeigen Verfahren zum Verbinden eines ersten Teilnehmers 1 mit einem zweiten Teilnehmer 2 über ein Telefonnetz 3, das sich aus einer Anzahl miteinander verbundener Mobilfunk- oder Festnetze zusammensetzt, von denen drei Mobilfunknetze 4, 5 und 6 beispielhaft dargestellt sind. In den Fig. 1 und 3 sind Verfahren zum Aufbauen eines Anrufs vom rufenden Teilnehmer 1 zum angerufenen Teilnehmer 2 dargestellt, in den Fig. 2 und 4 Verfahren zum Aufbauen eines Rückrufs vom nun rufenden Teilnehmer 2 zum nun gerufenen Teilnehmer 1, und in Fig. 5 Varianten der Verfahren der Fig. 1 bis 4.

Das Netz 6 des Teilnehmers 2 ist ein Mobilfunknetz nach einem 2G-, 3G-, 4G-, 5G-Standard oder höher, wie GSM, UMTS, LTE od.dgl. Der Teilnehmer 2 im Mobilfunknetz 6 ist demgemäß eine Mobilstation, beispielsweise ein Mobiltelefon, Smartphone usw.

Das Mobilfunknetz 6 ist im gesamten Telefonnetz 3 über seine Netzvorwahl MN_{B} adressierbar, im vorliegenden Beispiel die Netzvorwahl "+43661". Der Teilnehmer bzw. die Mobilstation 2 ist im Telefonnetz 3 durch seine bzw. ihre die Netzvorwahl MN_{B} inkludierende Rufnummer B adressierbar, im vorliegenden Beispiel die Rufnummer "+43661/22222". Diese an die Mobilstation 2 im Mobilfunknetz 6 vergebene Rufnummer B wird im weiteren auch als "erste" bzw. "persönliche" Rufnummer der Mobilstation 2 bezeichnet.

In ähnlicher Weise ist der Teilnehmer 1, im gezeigten Beispiel wieder eine Mobilstation in einem Mobilfunknetz 4 mit der Netzvorwahl MN_{A}, z.B. "+43660", durch seine bzw. ihre Rufnummer A, hier "+43660/11111", identifiziert. Für die Zwecke des vorliegenden Verfahrens ist es jedoch nicht erforderlich, dass das Netz 4 ein Mobilfunknetz und der Teilnehmer 1 eine Mobilstation ist, das Netz 4 des Teilnehmers 1 könnte auch ein Festnetz (Plain Old Telephone System, POTS) mit der Fähigkeit zur Übermittlung von Anruferkennungen (Caller Line Identification, CLI) sein, oder ein an das Telefonnetz 3 angeschlossenes VoIP-Netz (Voice over IP) sein, in welchem der Teilnehmer 1 z.B. ein Internet-Telefon oder Internet-Terminal ist.

Das die Netze 4 und 6 in der Anruf- und Rückrufsituation der Fig. 1 bis 5 verbindende Netz 5 des Telefonnetzes 3 ist wiederum - so wie das Mobilfunknetz 6 der Mobilstation 2 - ein Mobilfunknetz nach einem 2G-, 3G-, 4G-, 5G-Standard oder höher, wie GSM, UMTS, LTE od.dgl. Das Mobilfunknetz 5 ist im Telefonnetz 3 durch seine Netzvorwahl MN_{VB} adressierbar, im vorliegenden Beispiel die Netzvorwahl "+43669". Das Mobilfunknetz 5 wird im weiteren auch als "zweites" Mobilfunknetz bezeichnet.

Das Mobilfunknetz 5 ist im gezeigten Beispiel in Form eines "Mobile Virtual Network Operator" (MVNO) 5' in einem dritten Mobilfunknetz 5" implementiert ("virtualisiert"), welches die Hardware-Infrastruktur für das MVNO-Netz 5' bereitstellt. Die Aufgabenverteilung zwischen MVNO-Netz 5' und MNO-Netz 5" des Mobilfunknetzes 5 kann dabei je nach Virtualisierungsgrad bzw. Anteil an Infrastruktur, die das MNO-Netz 5" für das MVNO-Netz 5' bereitstellt, verschieden sein, wie es als Virtualisierungsstufen "thick", "thin" und "skinny" bzw. "full" und "light" für MVNOs in der Technik bekannt ist. Es versteht sich jedoch, dass das Mobilfunknetz 5 auch ohne Virtualisierungsaufteilung in die Netze 5' und 5" durch ein einziges Mobilfunknetz nach den genannten Standards realisiert sein kann.

Das Mobilfunknetz 5 enthält zumindest einen Serviceknoten 7 mit - darin integrierten oder daran angeschlossenen - Datenbanken 8' und 8". Es versteht sich, dass die Datenbanken 8' und 8" auch durch eine gemeinsame Datenbank realisiert sein können. Der Serviceknoten 7 ist im gezeigten Beispiel im MVNO-Netz 5' beheimatet, kann alternativ jedoch auch im infrastrukturbereitstellenden MNO-Netz 5" beheimatet sein kann, oder auch über beide Netze 5', 5" verteilt sein. In einem Mobilfunknetz 5 nach dem GSM-, UMTS- oder LTE-Standard ist der Serviceknoten 7 beispielsweise im zentralen Vermittlungsknoten (Mobile Services Switching Center, MSC) des Mobilfunknetzes 5 implementiert oder daran über eine Datenverbindung angeschlossen.

Um die persönliche Rufnummer B der Mobilstation 2 gegenüber anrufenden oder angerufenen Teilnehmern wie dem Teilnehmer 1 zu schützen, werden mit Hilfe der geschilderten Komponenten die folgenden Schritte ausgeführt.

In einem ersten, dem Anruf vom Teilnehmer 1 zur Mobilstation 2 (oder umgekehrt) vorhergehenden Schritt werden der Mobilstation 2, genauer deren erster, persönlicher Rufnummer B, eine oder mehrere zweite, "virtuelle" Rufnummer" VB₁, VB₂, ..., allgemein VBₙ, im zweiten Mobilfunknetz 5 zugeordnet. Als Beispiel für eine solche virtuelle Rufnummer VBₙ im zweiten Mobilfunknetz 5 wird hier die Rufnummer "+43669/87654" verwendet. Diese hier "erste" Zuordnung Z₁ genannte Zuordnung B↔VBₙ wird in der Datenbank 8' des Serviceknotens 7 des Mobilfunknetzes 5 in einer Zuordnungstabelle 9' gespeichert. Jede erste Zuordnung Z₁, d.h. B↔VB_{1,} B↔VB₂, ..., B↔VBₙ, ..., ist dabei gleichzeitig durch ihre Zuordnungskennung 1, 2, ... allgemein n, identifiziert. Es versteht sich, dass im einfachsten Fall einer nur einzigen ersten Zuordnung Z₁ = B↔VB die Zuordnungskennung n entbehrlich ist und entfallen kann.

Die virtuelle Rufnummer VBₙ kann bedenkenlos vom Benutzer der Mobilstation 2 publiziert und an Dritte weitergegeben werden, z.B. an den Teilnehmer 1, da das Mobilfunknetz 5 und die weiteren Schritte des beschriebenen Verfahrens seine persönliche Rufnummer B im Mobilfunknetz 6 schützen bzw. anonymisieren.

Möchte der Teilnehmer 1 die Mobilstation 2 anrufen, wählt er die jeweilige ihm vom Benutzer bekanntgegebene virtuelle Rufnummer VBₙ, welche die Netzvorwahl MN_{VB} des zweiten Mobilfunknetzes 5 als Vorwahl enthält. Dies baut einen ersten Anruf 10 vom Teilnehmer 1 zum Mobilfunknetz 5 auf, welcher als Zielrufnummer (Mobile Target) MT₁ die n-te virtuelle Rufnummer VBₙ der Mobilstation 2 und als "erste" Anruferkennung (Caller Line Identification) CLI₁ die Rufnummer A des Teilnehmers 1 enthält.

Da in aufeinanderfolgenden Anrufen 10 unterschiedliche Teilnehmer 1 mit verschiedenen Rufnummern A ein und dieselbe Mobilstation 2 anrufen können, wird im weiteren der Index j (j = 1, 2, ...) zur Unterscheidung unterschiedlicher erster Anruferkennungen CLI_{1,j} solcher verschiedener Teilnehmer 1 verwendet.

Der erste Anruf 10 wird im Telefonnetz 3 anhand der Netzvorwahl NM_{VB} zum Mobilfunknetz 5 geleitet (verkehrsausgeschieden). Alternativ könnte die virtuelle Rufnummer VBₙ im Telefonnetz 3 bekanntgegeben worden sein, z.B. durch Einspeisen in ein Heimatortsregister (Home Location Register, HLR) 11 des Mobilfunknetzes 5. Ein solcher Eintrag im HLR wird in GSM-, UMTS- oder LTE-Netzen in standardkonformer Weise im Telefonnetz 3 bzw. allen darin enthaltenen Mobilfunknetzen distribuiert, um die Beheimatung der Rufnummer VBₙ im Mobilfunknetz 5 und damit dessen Zuständigkeit anzuzeigen, so dass der Anruf 10 zum Mobilfunknetz 5 geleitet wird.

Der Anruf 10 wird im Mobilfunknetz 5 an einem internen oder virtuellen Anschluss 12 desselben entgegengenommen bzw. terminiert, unter Mitwirkung des Serviceknotens 7. Der Serviceknoten 7 extrahiert nun aus der in der Signalisierung des ersten Anrufs 10 enthaltenen Zielrufnummer MT₁ die virtuelle Rufnummer VBₙ, schlägt diese in der Zuordnungstabelle 9' nach und ermittelt daraus die zugeordnete persönliche Rufnummer B sowie - falls dieser mehrere virtuelle Rufnummern VBₙ zugeordnet sind - die Kennung n der jeweiligen ersten Zuordnung Z₁ = VBₙ↔B. Zusätzlich generiert der Serviceknoten 7 eine neue ("zweite") Anruferkennung CLI₂ wie folgt beschrieben.

Zu diesem Zweck ist im Mobilfunknetz 5 ein Pool von Rufnummern reserviert, genannt "Reserve-Rufnummern" C₁, C₂, ..., Cⱼ, ..., welche jeweils die Netzvorwahl MN_{VB} des Mobilfunknetzes 5 enthalten. Da die Netzvorwahl MN_{VB} des Mobilfunknetzes 5 bekannt und für alle Reserve-Rufnummern Cⱼ gleich ist, genügt es, im Pool die verbleibenden Ziffern der Reserve-Rufnummern Cⱼ zu speichern. In dem gezeigten Beispiel wird der Rufnummernblock +43669/000001 bis +43669/009999 im Mobilfunknetz 5 für Reserve-Rufnummern Cⱼ reserviert. Ferner wird für jede mögliche erste Zuordnung Z₁, d.h. pro Zuordnung B↔VB_{1,} B↔VB₂, ..., B↔VBₙ, ..., jeweils eine weitere Zuordnungstabelle 9" im Serviceknoten 7 eingerichtet, beispielsweise in dessen zweiter Datenbank 8".

Wenn nun im zweiten Mobilfunknetz 5, genauer am Anschluss 12, ein erster Anruf 10 mit einer ersten Anruferkennung CLI_{1,j} einlangt, wird in der für die entsprechende erste Zuordnung Z₁ (diese ist identifiziert durch die Zielrufnummer MT₁ = VBₙ) eingerichteten Zuordnungstabelle 9" ein neuer Eintrag angelegt, welcher eine - hier "zweite" Zuordnung genannte - Zuordnung Z₂ zwischen der Anruferkennung CLI_{i,j} und einer bislang noch unzugeordneten ("freien") Reserve-Rufnummer Cⱼ aus dem Pool enthält, d.h. Z₂ = CLI_{1,j}↔Cⱼ.

Es versteht, dass beim Einlangen des Anrufs 10 zunächst in der Tabelle 9" nachgeschlagen wird, ob für die empfangene Anruferkennung CLI_{1,j} bereits eine zweite Zuordnung Z₂ vorhanden ist; wenn ja, wird die vorhanden Zuordnung Z₂ verwendet, um nicht unnötig Einträge in der Tabelle 9" zu erzeugen bzw. unnötig Reserve-Rufnummern Cⱼ aus dem Pool zu verbrauchen.

Wenn zu einem späteren Zeitpunkt ein anderer Anruf 10 von einem anderen Teilnehmer 1 mit einer anderen Rufnummer A für dieselbe Mobilstation 2 einlangt, d.h. mit einer anderen ersten Anruferkennung CLI_{1,j}, für welche noch keine Zuordnung Z₂ in der Tabelle 9" vorhanden ist, dann wird dieser neuen Anruferkennung CLI_{1,j} eine andere bislang unzugeordnete Reserve-Rufnummer Cⱼ aus dem Pool an verfügbaren Reserve-Rufnummern des Mobilfunknetzes 5 zugeordnet, d.h. eine neue Zuordnung Z₂ in der Tabelle 9" gespeichert.

Für jede erste Zuordnung Z₁, d.h. für jede virtuelle Rufnummer VBₙ, kann eine eigene Tabelle 9" eingerichtet werden. Alternativ kann eine einzige Tabelle 9" verwendet werden, die eine zusätzliche Spalte hat, in welcher zur Zuordnung CL_{1,j}↔Cⱼ zusätzlich auch die jeweilige virtuelle Rufnummer VBₙ, d.h. erste Zuordnung Z₁, gespeichert wird. Ebenso wäre es möglich, für unterschiedliche Zuordnungskennungen n der ersten Zuordnung Z₁ verschiedene Bereiche oder Sub-Blöcke des Pools von Reserve-Rufnummern Cⱼ des Mobilfunknetzes 5 zu reservieren, so dass beispielsweise bereits aus der Kenntnis des Sub-Blocks, in welchem die jeweilige Reserve-Rufnummer Cⱼ einer Zuordnung Z₂ liegt, auf die entsprechende erste Zuordnung Z₁ = B↔VBₙ rückgeschlossen werden kann. Auch ist es gleichbedeutend, ob die zweite Zuordnung Z₂ in der/den Datenbank(en) 8', 8" mit der virtuellen Rufnummer VBₙ, der ersten Zuordnung Z₁ oder der Zuordnungskennung n verknüpft wird oder ob die aus einem darin zuordnungsspezifischen Sub-Block des Pools entnommene Reserve-Rufnummer Cⱼ selbst die Zuordnungskennung n darstellt, um jeweils den Konnex zwischen einer ersten Zuordnung Z₁, d.h. der angerufenen Mobilstation 2, und einer dafür gespeicherten zweiten Zuordnung Z₂, d.h. dem anrufenden Teilnehmer 1, herzustellen; alle diese Varianten sind datentechnisch äquivalent. So kann im einfachsten Fall auch nur eine einzige Datenbank 8' oder 8" im Serviceknoten 7 verwendet werden, in der alle diese Zuordnungen Z₁, Z₂ gegenseitig referenziert mit minimaler Redundanz gespeichert sind.

Auf Basis der zweiten Zuordnung Z₂ wird nun die zweite Anruferkennung CLI₂ erzeugt. Im einfachsten Fall entspricht die zweite Anruferkennung CLI₂ der in der Zuordnung Z₂ der ersten Anruferkennung CLI_{1,j} zugeordneten Reserve-Rufnummer Cⱼ. Das gilt auch für den Fall, dass eine für die jeweilige virtuelle Rufnummer VBₙ spezifische Reserve-Rufnummer Cⱼ verwendet wurde. In einer anderen Ausführungsform kann die zweite Anruferkennung CLI₂ zusätzlich zu der Reserve-Rufnummer Cⱼ auch die jeweilige Zuordnungskennung n der ersten Zuordnung Z₁ = B↔VBₙ haben.

Anschließend veranlasst der Serviceknoten 7 den Aufbau eines zweiten Anrufs 13 vom Mobilfunknetz 5 ausgehend an die durch die Rufnummer B identifizierte Mobilstation 2 im Mobilfunknetz 6. Die Zielrufnummer MT₂ des zweiten Anrufs 13 ist dabei die Rufnummer B, und als Anruferkennung wird die neugenerierte zweite Anruferkennung CLI₂ mitübermittelt.

Nach dem Aufbauen des zweiten Anrufs 13 (oder auch schon währenddessen) schaltet der Serviceknoten 7 den im Mobilfunknetz 5 terminierten ersten Anruf 10 zum zweiten Anruf 13 durch, d.h. er verbindet die Sprachdaten des ersten Anrufs 10 mit den Sprachdaten des zweiten Anrufs 13 bzw. leitet SMS-Daten aus dem ersten Anruf 10 als SMS-Daten im zweiten Anruf 13 weiter, siehe die Verbindung 14.

Beim Entgegennehmen des ersten Anrufs 10, Aufbauen des zweiten Anrufs 13 und/oder Durchschalten der Verbindung 14 vom ersten Anruf 10 zum zweiten Anruf 13 kann der Serviceknoten 7 auch Filterfunktionen hinsichtlich vom Benutzer der Mobilstation 2 gewünschter oder unerwünschter Anruferkennungen CLI_{1,j} durchführen, sog. "whitelisting" oder "blacklisting", um den Benutzer der Mobilstation 2 vor unerwünschten Anrufen zu bewahren bzw. nur gewünschte Anrufe durchzustellen. Zu diesem Zweck können im Serviceknoten 7 bzw. dessen Datenbank 8' oder 8" zur persönlichen Rufnummer B der Mobilstation 2 eine (oder mehrere) Zulassungslisten ("whitelists") WLₙ von ersten Anruferkennungen CLI_{1,j} (Rufnummern A) gespeichert sein, die durchgeschaltet werden sollen (alle anderen werden gesperrt); oder eine (oder mehrere) Sperrlisten ("blacklists") BLₙ von solchen ersten Anruferkennungen CLI_{1,j} (Rufnummern A), welche nicht durchgeschaltet werden dürfen (alle anderen werden durchgeschaltet), d.h. für welche keine Durchschaltung (Verbindung 14) erfolgt und demgemäß auch kein zweiter Anruf 13 aufgebaut zu werden braucht.

Im Falle mehrerer virtueller Rufnummer VBₙ können auch unterschiedliche Zulassungslisten WLₙ bzw. Sperrlisten BLₙ verwendet werden, und zwar je nach ermittelter Zuordnung n, wie sie sich aus der vom Teilnehmer 1 gewählten virtuellen Rufnummer VBₙ ergibt. In diesem Fall wird also die der jeweiligen gewählten virtuellen Rufnummer VBₙ zugeordnete Zulassungs- oder Sperrliste WLₙ, BLₙ aus der Datenbank 8' oder 8" herausgesucht und dann überprüft, ob die Anruferkennung CLI_{1,j} des ersten Anrufs 10 darin enthalten ist oder nicht. Nur dann, wenn diese entweder in der Zulassungsliste WLₙ enthalten ist oder nicht in der Sperrliste BLₙ enthalten ist, wird der zweite Anruf 13 aufgebaut und der erste Anruf 10 zum zweiten Anruf 13 durchgeschaltet (Verbindung 14), andernfalls bleibt der erste Anruf 10 am Anschluss 12 des Mobilfunknetzes 5 terminiert bzw. wird abgebrochen. Optional kann der anrufende Teilnehmer 1 auch einen entsprechenden Ansagetext erhalten, den der Serviceknoten 7 in den Anschluss 12 einspielt.

Die Zulassungs- und/oder Sperrlisten WL_{n,} BLₙ können in einer eigenen Zuordnungstabelle 9''' des Serviceknotens 7 bzw. dessen Datenbank 8', 8" gespeichert sein; oder in derselben Zuordnungstabelle 9', in der auch die ersten Zuordnungen Z₁ gespeichert sind; oder auch in der Zuordnungstabelle 9" der zweiten Zuordnungen Z₂; beispielsweise könnte bei jeder einzelnen Zuordnung Z₁ die jeweilige Liste WLₙ und/oder BLₙ mitgespeichert sein.

Ein solches "Blacklisting" bzw. "Whitelisting" funktioniert bei dem vorgestellten Verfahren sogar für solche Anrufe 10 vom Teilnehmer 1 aus, die mit einer "Rufnummernunterdrückung" aufgebaut werden. Nach herkömmlichen CLI-Telefonstandards entfernt eine solche Rufnummernunterdrückung die Anruferkennung CLI_{1,j} nicht aus dem Anruf 10, sondern kennzeichnet die Anruferkennung CLI_{1,j} im Anruf 10 lediglich mit einem Flag als "unterdrückt"; das Flag wird üblicherweise erst im letzten Teilnetz des Telefonnetzes 3 bei der Zustellung des Anrufs zum gerufenen Teilnehmer ausgewertet und dort dann die Anruferkennung unterdrückt. Die Anruferkennung CLI_{1,j} ist damit jedenfalls noch in dem zwischenliegenden Mobilfunknetz 5 und damit im Serviceknoten 7 verfügbar und kann für die genannten Blacklisting- und Whitelisting-Funktionen ausgewertet werden.

Da jeder Anruf 13, der in der Mobilstation 2 einlangt, durch die in der zweiten Anruferkennung CLI₂ enthaltenen Netzvorwahl MN_{VB} des Mobilfunknetzes 5, die Teil der Reserve-Rufnummer Cⱼ ist, als ein an die virtuelle Rufnummer VBₙ der Mobilstation 2 gerichteter Anruf erkennbar ist, kann der Benutzer der Mobilstation 2 anhand der Anruferkennung CLI₂ zusätzlich entscheiden, ob er einen solchen Anruf entgegennehmen möchte oder nicht. Wenn die Mobilstation 2 mehrere virtuelle Rufnummern VBₙ hat, kann der Benutzer anhand der mitübermittelten Zuordnungskennung n, die gegebenenfalls auch bloß ein Bestandteil der Reserve-Rufnummer Cⱼ ist, wenn diese deren Zugehörigkeit zu einem Sub-Block des Pools anzeigt, auch den jeweiligen Öffentlichkeitskreis, welchem er die jeweilige virtuelle Rufnummer VBₙ bekanntgegebenen hat, erkennen.

Die Mobilstation 2 kann z.B. als Smartphone auch so programmiert sein, dass sie die Netzvorwahl MN_{VB} des Mobilfunknetzes 5 automatisch in der Anruferkennung CLI₂ detektiert und dazu spezielle Verarbeitungsschritte für einen solchen Anruf ausführt, z.B. eine spezielle optische oder akustische Signalisierung, eine deutliche graphische Anzeige der Zuordnungskennung n, eine spezielle Anrufprotokollierung, einen individuellen Ansagetext eines Anrufbeantworters usw.

Solche für die jeweilige gewählte virtuelle Rufnummer VBₙ individuellen Ansagetexte können im übrigen auch bereits vom Serviceknoten 7 selbst in den den ersten Anruf 10 terminierenden Anschluss 12 eingespielt werden, z.B. wenn der Benutzer der Mobilstation 2 den zweiten Anruf 13 nicht innerhalb einer vorgegebenen Zeitspanne beantwortet, ihn versäumt oder bewusst nicht abhebt. Eine solche individuelle Ansagetext- bzw. Anrufbeantworterfunktion, d.h. je nach gewählter virtueller Rufnummer VBₙ, kann daher sowohl direkt in der Mobilstation 2 anhand der in der Anruferkennung CLI₂ enthaltenen Zuordnungskennung n als auch direkt im Serviceknoten 7 anhand der in der Zielrufnummer MT₁ enthaltenen Rufnummer VBₙ ausgeführt werden.

Über eine (optionale) Datenverbindung 15 kann der Benutzer der Mobilstation 2 alle seine virtuellen Rufnummern VBₙ im Mobilfunknetz 5 auch selbst verwalten, z.B. registrieren (erwerben), deaktivieren oder löschen usw., beispielsweise von einem Internetterminal 16 aus. Das Terminal 16 kann beispielsweise - wenn die Mobilstation 2 ein internetfähiges Smartphone ist - auch direkt durch die Mobilstation 2 gebildet sein, wenn diese eine Datenverbindung 15 zum Mobilfunknetz 5 bzw. dessen Serviceknoten 7 hat. Über die Datenverbindung 15 und das Internet-terminal 16 (bzw. eine entsprechende Terminalapplikation in der Mobilstation 2) kann der Benutzer auch die Zulassungs- und Sperrlisten WL_{n,} BLₙ für die Filterfunktionen des Serviceknotens 7 (ein)pflegen.

Um allfällige regulatorische Auflagen hinsichtlich der Nachvollziehbarkeit von Verbindungen zu erfüllen, kann der Serviceknoten 7 optional auch über eine Enforcement-Schnittstelle 17 für eine Behördeneinschau in die Zuordnungstabelle 9 verfügen.

Fig. 2 zeigt das Verfahren zum Aufbauen eines Rückrufs von der Mobilstation 2 zum Teilnehmer 1. Die Rückrufsituation wird unter Verwendung der zweiten Anruferkennung CLI₂, die in der Mobilstation 2 im Zuge des zweiten Anrufs 13 von Fig. 1 erhalten wurde, erläutert.

Beim Rückruf wird die zweite Anruferkennung CLI₂ in einem dritten Anruf 18 als neue Zielrufnummer MT₃ verwendet. Aufgrund der Verwendung der Reserve-Rufnummer Cⱼ anstelle der ersten Anruferkennung CLI_{1,j}, welche ja auch die Netzvorwahl MN_{A} des Mobilfunknetzes 4 enthalten und deren Aufnahme in die zweite Anruferkennung CLI₂ daher zu einer beträchtlichen Stellenlänge der zweiten Anruferkennung CLI₂ führen würde, zumal diese auch noch die Netzvorwahl MN_{VB} des Mobilfunknetzes 5 enthält, kann die Stellenlänge der zweiten Anruferkennung CLI₂ und damit der Zielrufnummer MT₃ kurz gehalten werden. Dadurch kann der dritte Anruf 18 selbst in Telefonnetzen 3, die technischen Beschränkungen hinsichtlich der maximalen Stellenlänge von Zielrufnummern unterliegen, durchgeführt werden.

Anhand der in der Zielrufnummer MT₃ enthaltenen Netzvorwahl MN_{VB} des Mobilfunknetzes 5 wird der dritte Anruf 18 im Telefonnetz 3 zum Mobilfunknetz 5 geleitet (verkehrsausgeschieden) und dort wieder unter Mitwirkung des Serviceknotens 7 an einem internen oder virtuellen Anschluss 19 des Mobilfunknetzes 5 terminiert.

Der Serviceknoten 7 extrahiert nun die in der Zielrufnummer MT₃ enthaltene Reserve-Rufnummer Cⱼ und schlägt diese in der Tabelle 9" jener zweiten Zuordnungen Z₂ nach, welche für eine solche erste Zuordnung Z₁ angelegt ist, in der die in der Anruferkennung CLI₃ übermittelte "echte" erste Rufnummer B der Mobilstation 2 enthalten ist. Wenn die im Anruf 18 gewählte Zielrufnummer MT₃ nicht nur die Reserve-Rufnummer Cⱼ, sondern auch die Zuordnungskennung n enthielt, wird dabei die durch die Zuordnungskennung n referenzierte erste Zuordnung Z₁ und dazu zugehörige Tabelle 9" von zweiten Zuordnungen Z₂ verwendet. Wenn andererseits die Reserve-Rufnummer Cⱼ bereits zuordungsspezifisch für eine solche "n-te" Zuordnung Z₁ = B↔VBₙ vergeben wurde, genügt es, die durch die Anruferkennung CLI₃ = B referenzierte erste Zuordnung Z₁ und damit deren globale Tabelle 9" von zweiten Zuordnungen Z₂ solch zuordnungsspezifischer Reserve-Rufnummern Cⱼ aufzusuchen.

Aus der ermittelten Zuordnung Z₂ wird nun die dort eingetragene erste Anruferkennung CLI_{1,j} herausgesucht, welche der Rufnummer A des Teilnehmers 1 entspricht, und der Serviceknoten 7 baut nun einen vierten Anruf 20 vom Mobilfunknetz 5 zum Teilnehmer 1 mit der Zielrufnummer MT₄ = A = CLI_{1,j} auf. Nach dem Anrufaufbau schaltet der Serviceknoten 7 den dritten Anruf 18 hinsichtlich der darin transportierten Sprach- oder SMS-Daten zum vierten Anruf 20 durch, siehe Verbindung 21.

Der vierte Anruf 20 kann entweder mit unterdrückter Anruferkennung erfolgen oder - bevorzugt - eine neue, vierte Anruferkennung CLI₄ enthalten, welche der Serviceknoten 7 wie folgt erzeugt hat. Aus der im dritten Anruf 18 von der Mobilstation 2 übermittelten Anruferkennung CLI₃, die gleich der persönlichen Rufnummer B der Mobilstation 2 ist, und - optional - der in der Zielrufnummer MT₃ enthaltenen oder durch die Reservenummer Cⱼ impliziert referenzierten Zuordnungskennung n sucht der Serviceknoten 7 aus der Zuordnungstabelle 9' die jeweilige durch die Zuordnungskennung n angegebene erste Zuordnung Z₁ = B↔VBₙ heraus (oder, falls keine Zuordnungskennung n vorhanden, die einzige erste Zuordnung Z₁ = B↔VB) und setzt die solcherart ermittelte virtuelle Rufnummer VBₙ (bzw. VB) als neue Anruferkennung CLI₄ in dem vierten Anruf 20 ein.

Der Benutzer am Endgerät 1 erhält damit einen Rückruf 20 signalisiert, der als Anruferkennung CLI₄ genau jene virtuelle Rufnummer VBₙ anzeigt, welche er zuvor in seinem Erstanruf (Fig. 1) verwendet hat. Das Anruf- und Rückrufverfahren der Fig. 1 und 2 ist daher für den Teilnehmer 1 vollkommen transparent, ohne die persönliche Rufnummer B der Mobilstation 2 preiszugeben, und ermöglicht auch einen datengeschützten Rückruf von der Mobilstation 2 zum Teilnehmer 1.

In den Fig. 3 und 4 ist jeweils eine Variante der Verfahren nach den Fig. 1 und 2 dargestellt, wobei im folgenden nur die Unterschiede gegenüber den Fig. 1 und 2 erörtert werden.

Wie in den Fig. 3 und 4 gezeigt, kann eine entsprechend programmierte Applikation 2' der Mobilstation 2 in einem Speicher 2" der Mobilstation 2 eine eigene Tabelle bzw. Kopie 2'" der zweiten Zuordnungen Z₂ = CLI_{1,j}↔Cⱼ führen. Über die Datenverbindung 15 hält die Applikation 2' die Tabelle 2'" soweit wie möglich synchron zur Tabelle 9" im Serviceknoten 7, d.h. aktualisiert durch entsprechenden Austausch von Datenpaketen über die Datenverbindung 15 - je nach Verfügbarkeit der Datenverbindung 15 und wenn sich Änderungen in der Tabelle 9" ergeben - die eigene Kopie 2'" der Tabelle 9". Die Mobilstation 2 bzw. ihre Applikation 2' verfügt nun über eine - soweit es den Möglichkeiten der Datenverbindung 15 entspricht - jeweils aktuelle Kopie 2'" der Tabelle 9" von zweiten Zuordnungen Z₂ des Serviceknotens 7.

Wenn nun der zweite Anruf 13 mit der zweiten Anruferkennung CLI₂, welche die in der Zuordnung Z₂ enthaltene Reserve-Rufnummer Cⱼ umfasst, empfangen wird, kann die Applikation 2' aus ihrem Speicher 2" die in ihrer lokalen Kopie 2'" von Zuordnungen Z₂ der Reserve-Rufnummer Cⱼ zugeordnete erste Anruferkennung CLI_{1,j} und damit die Rufnummer A des rufenden Teilnehmers 1 heraussuchen und beispielsweise auf ein Bildschirm der Mobilstation 2 dem Benutzer anzeigen. Optional kann die Applikation 2' auch weitere Verarbeitungsschritte auf Basis der ersten Anruferkennung CLI_{i,j} bzw. Rufnummer A durchführen, wie die Verwendung eines speziellen Klingeltons, Ansagetextes oder Anrufbeantworters, die Behandlung in Whitelists oder Blacklists usw. usf.

Darüber hinaus kann beim Rückrufen (Fig. 4) die Applikation 2' dem Benutzer die Rufnummer A des rückzurufenden Teilnehmers 1 anzeigen, oder der Benutzer kann direkt die in der Tabelle 2'" des Speichers 2' der Mobilstation 2 gespeicherte Anruferkennung CLI_{1,j} = A mit der Applikation 2' "wählen", woraufhin die Applikation 2' die Anruferkennung CLI_{1,j} bzw. Rufnummer A mit Hilfe der lokalen Kopie 2'" der Zuordnungstabelle 9" in die für den Anruf 18 zu verwendende Zielrufnummer MT₃ = Cⱼ, optional ergänzt um die Zuordnungskennung n, übersetzen.

Im Falle mehrerer virtueller Rufnummern VBₙ kann die Applikation 2' dabei dem Benutzer auch eine Auswahlmöglichkeit für die gewünschte virtuelle Rufnummer VBₙ bieten, die dem Teilnehmer 1 als Anruferkennung CLI₄ signalisiert werden soll, beispielsweise in Form der jeweiligen Zuordnungskennung n, welche der Benutzer der Mobilstation 2 für den zu tätigenden Anruf in der Applikation 2' auswählt.

Fig. 5 zeigt weitere alternative Ausführungsformen der Verfahren der Fig. 1 bis 4, wobei hier zur besseren Übersicht nur die beteiligten Teilnehmer, Netze und Anrufverbindungen dargestellt sind, dies nun aber sowohl für die Anrufsituation der Fig. 1 und 3 als auch die Rückrufsituation der Fig. 2 und 4. Soferne nicht nachstehend anders beschrieben, sind in Fig. 5 alle Komponenten, Funktionen und Verfahrensabläufe so wie zuvor in Bezug auf die Fig. 1 bis 4 beschrieben.

Gemäß Fig. 5 kann beim Anrufaufbau vom Teilnehmer 1 zum Teilnehmer 2 der zweite Anruf 13 auch über ein anderes Mobilfunk- oder Festnetz 5''' aufgebaut werden. Im gezeigten Beispiel ist dieses andere bzw. weitere Netz 5''' ein Mobilfunknetz mit der hier beispielhaften Netzvorwahl "+43668". Es versteht sich, dass das weitere Netz 5''' - so wie das Mobilfunknetz 5 - ebenfalls als ein MVNO in einem MNO-Mobilfunknetz virtualisiert sein kann.

Der Serviceknoten 7 steht sowohl mit dem zweiten Mobilfunknetz 5 als auch dem weiteren Netz 5''' in Verbindung und kann somit den im Mobilfunknetz 5 am Anschluss 12 einlangenden Anruf 10 über die Verbindung 14 zu dem vom weiteren Netz 5''' aus aufgebauten zweiten Anruf 13 durchschalten.

Auch in der umgekehrten Situation des Rückrufens vom Teilnehmer 2 zum Teilnehmer 1 kann der dritte Anruf 13 an einem Anschluss 19 des weiteren Netzes 5'" empfangen und vom Serviceknoten 7 über die Verbindung 21 zum vierten Anruf 20 durchgeschaltet werden.

Der Serviceknoten 7 kann dabei sowohl im Mobilfunknetz 5 - sei es im MVNO-Netz 5' oder dem infrastrukturbereitstellenden MNO-Netz 5" - als auch in dem weiteren Netz 5'" beheimatet sein, oder auch über beide Netze 5, 5'" verteilt sein, einschließlich allfälliger diese implementierender MVNO- und MNO-Netze. In Mobilfunknetzen 5, 5'" nach dem GSM-, UMTS- oder LTE-Standard kann der Serviceknoten 7 beispielsweise in einem zentralen Vermittlungsknoten MSC eines der Netze 5, 5'" implementiert und mit jeweils dem Vermittlungsknoten des anderen Netzes 5''', 5 über eine Datenverbindung verbunden sein, oder er ist von den MSC-Vermittlungsknoten der Netze 5, 5''' gesondert und über jeweils eine Datenverbindung mit diesen verbunden. Auch kann die Funktionalität des Serviceknotens 7 durch einen oder mehrere der Vermittlungsknoten MSC selbst bzw. darauf ablaufende Tasks gemeinsam realisiert sein.

Die Erfindung ist nicht auf die dargestellten Ausführungsformen beschränkt, sondern umfasst alle Varianten, Modifikationen und deren Kombinationen, die den Rahmen der angeschlossenen Ansprüche fallen.

## Patentansprüche

1. Verfahren zum Anrufaufbau von einem Teilnehmer (1), der eine erste Anruferkennung (CLI_{1,j}) hat, zu einer Mobilstation (2), an die eine erste Rufnummer (B) in einem ersten Mobilfunknetz (6) vergeben ist, **gekennzeichnet durch**:
Speichern einer ersten Zuordnung (Z₁) zwischen der ersten Rufnummer (B) und einer in einem zweiten Mobilfunknetz (5) vergebenen zweiten Rufnummer (VBₙ) in einem Serviceknoten (7) des zweiten Mobilfunknetzes (5);
Entgegennehmen eines ersten Anrufs (10), welcher an die zweite Rufnummer (VBₙ) gerichtet ist und die erste Anruferkennung (CLI_{1,j}) enthält, im zweiten Mobilfunknetz (5);
falls der ersten Anruferkennung (CLI_{1,j}) noch keine Reserve-Rufnummer (Cⱼ) im Serviceknoten (7) zugeordnet ist, Zuordnen einer noch unzugeordneten Reserve-Rufnummer (Cⱼ) aus einem Pool von Reserve-Rufnummern des zweiten Mobilfunknetzes (5) zu der ersten Anruferkennung (CLI_{1,j}) und Speichern dieser Zuordnung als zweite Zuordnung (Z₂) zu der ersten Zuordnung (Z₁) im Serviceknoten (7);
Erzeugen einer zweiten Anruferkennung (CLI₂) umfassend die der ersten Anruferkennung (CLI_{1,j}) zugeordnete Reserve-Rufnummer (Cⱼ);
Ermitteln der der zweiten Rufnummer (VBₙ) zugeordneten ersten Rufnummer (B) aus der gespeicherten ersten Zuordnung (Z₁); und
Aufbauen eines zweiten Anrufs (13) vom zweiten Mobilfunknetz (5) oder einem weiteren Mobilfunk- oder Festnetz (5''') zu der durch die erste Rufnummer (B) adressierten Mobilstation (2) und Durchschalten des ersten Anrufs (10) zum zweiten Anruf (13), wobei die zweite Anruferkennung (CLI₂) im zweiten Anruf (13) mitübermittelt wird.

2. Verfahren nach Anspruch 1, ferner umfassend:
Speichern zumindest einer weiteren ersten Zuordnung (Z₁) zwischen jeweils der ersten Rufnummer (B) und einer im zweiten Mobilfunknetz (6) vergebenen weiteren zweiten Rufnummer (VBₙ) im Serviceknoten (7), wobei für jede gespeicherte erste Zuordnung (Z₁) eine Zuordnungskennung (n) vergeben wird;
wobei die zweite Anruferkennung (CLI₂) auch die Zuordnungskennung (n) umfasst.

3. Verfahren nach Anspruch 1 oder 2, **dadurch gekennzeichnet, dass** der an die zweite Rufnummer (VBₙ) gerichtete erste Anruf (10) anhand der Netzvorwahl (MN_{VB}) des zweiten Mobilfunknetzes (5) erkannt und zu diesem geleitet wird, wo er an einem Anschluss (12) des zweiten Mobilfunknetzes (5) entgegengenommen und von dort zum zweiten Anruf (13) durchgeschaltet wird.

4. Verfahren nach Anspruch 1 oder 2, **dadurch gekennzeichnet, dass** die zweite Rufnummer (VBₙ) in das Heimatortsregister (11) des zweiten Mobilfunknetzes (5) eingetragen wird und der an die zweite Rufnummer (VBₙ) gerichtete erste Anruf (10) anhand des Heimatortsregisters (HLR) oder davon abgeleiteter Informationen zum zweiten Mobilfunknetz (5) geleitet wird, wo er an einem Anschluss (12) des zweiten Mobilfunknetzes (5) entgegengenommen und von dort zum zweiten Anruf (13) durchgeschaltet wird.

5. Verfahren nach einem der Ansprüche 1 bis 4, **dadurch gekennzeichnet, dass** der zweite Anruf (13) nur dann aufgebaut und der erste Anruf (10) nur dann durchgeschaltet wird, wenn die erste Anruferkennung (CLI_{1,j}) in einer Zulassungsliste (WLₙ) enthalten oder in einer Sperrliste (BLₙ) nicht enthalten ist, die im Serviceknoten (7) zur ersten Rufnummer (B) gespeichert ist.

6. Verfahren nach Anspruch 5 in Verbindung mit Anspruch 2, **dadurch gekennzeichnet, dass** für jede der einer ersten Rufnummer (B) zugeordneten zweiten Rufnummern (VBₙ) im Serviceknoten (7) eine individuelle Zulassungs- oder Sperrliste (WLₙ, BLₙ) gespeichert wird, wobei die jeweils anzuwendende Zulassungs- oder Sperrliste (WLₙ, BLₙ) anhand jener zweiten Rufnummer (VBₙ) ermittelt wird, an die der erste Anruf (10) gerichtet ist.

7. Verfahren nach einem der Ansprüche 1 bis 6, ferner zum anschließenden Rückrufen des Teilnehmers (1) von der Mobilstation (2) aus, umfassend:
Entgegennehmen eines dritten Anrufs (18), welcher die zweite Anruferkennung (CLI₂) als Zielrufnummer (MT₃) und die erste Rufnummer (B) als dritte Anruferkennung (CLI₃) enthält, im zweiten Mobilfunknetz (5);
Extrahieren der Reserve-Rufnummer (Cⱼ) aus der Zielrufnummer (MT₃) ;
Ermitteln der der Reserve-Rufnummer (Cⱼ) zugeordneten ersten Anruferkennung (CLI_{1,j}) aus der gespeicherten zweiten Zuordnung (Z₂) jener ersten Zuordnung (Z₁), welche die erste Rufnummer (B) enthält;
Aufbauen eines vierten Anrufs (20) vom zweiten Mobilfunknetz (5) oder einem weiteren Mobilfunk- oder Festnetz (5'") zu dem durch die ermittelte erste Anruferkennung (CLI_{1,j}) adressierten Teilnehmer (1) und Durchschalten des dritten Anrufs (18) zum vierten Anruf (20).

8. Verfahren nach Anspruch 7, ferner umfassend:
Ermitteln der der ersten Rufnummer (B) zugeordneten zweiten Rufnummer (VBₙ) aus der im Serviceknoten (7) gespeicherten ersten Zuordnung (Z₁), und Erzeugen einer vierten Anruferkennung (CLI₄) umfassend die ermittelte zweite Rufnummer (VBₙ);
wobei die vierte Anruferkennung (CLI₄) im vierten Anruf (20) mitübermittelt wird.

9. Verfahren nach Anspruch 7 in Verbindung mit Anspruch 2,
wobei beim Extrahieren auch die Zuordnungskennung (n) aus der Zielrufnummer (MT₃) extrahiert wird; und
wobei beim Erzeugen der vierten Anruferkennung (CLI₄) die der ersten Rufnummer (B) zugeordnete zweite Rufnummer (VBₙ) anhand der durch die extrahierte Zuordnungskennung (n) angegebenen ersten Zuordnung (Z₁) ermittelt wird.

10. Verfahren nach einem der Ansprüche 7 bis 9, **dadurch gekennzeichnet, dass** der an die zweite Anruferkennung (CLI₂) gerichtete dritte Anruf (18) anhand der Netzvorwahl (MN_{VB}) des zweiten Mobilfunknetzes (5) erkannt und zu diesem geleitet wird, wo er an einem Anschluss (19) des zweiten Mobilfunknetzes (5) entgegengenommen und von dort zum vierten Anruf (20) durchgeschaltet wird.

11. Verfahren nach einem der Ansprüche 1 bis 10, **dadurch gekennzeichnet, dass** die im Serviceknoten (7) für eine erste Zuordnung (Z₁) gespeicherten zweiten Zuordnungen (Z₂) über eine Datenverbindung (15) an die Mobilstation (2) gesandt und dort in einem Speicher (2") der Mobilstation (2) gespeichert werden.

12. Verfahren nach Anspruch 11, ferner umfassend:
Extrahieren der Reserve-Rufnummer (Cⱼ) aus der in einem zweiten Anruf (13) mitübermittelten zweiten Anruferkennung (CLI₂) in der Mobilstation (2);
Ermitteln der der extrahierten Reserve-Rufnummer (Cⱼ) in einer zweiten Zuordnung (Z₂) zugeordneten ersten Anruferkennung (CLI_{1,j}) aus dem Speicher (2"); und
Anzeigen der ersten Anruferkennung (CLI_{1,j}) in der Mobilstation (2).

13. Verfahren nach einem der Ansprüche 1 bis 12, **dadurch gekennzeichnet, dass** die zweite Rufnummer (VBₙ) im zweiten Mobilfunknetz (5) vergeben worden ist.

14. Verfahren nach einem der Ansprüche 1 bis 12, **dadurch gekennzeichnet, dass** die zweite Rufnummer (VBₙ) aus einem anderen Mobilfunknetz in das zweite Mobilfunknetz (5) rufnummernportiert worden ist.

15. Verfahren nach einem der Ansprüche 1 bis 14, **dadurch gekennzeichnet, dass** das zweite Mobilfunknetz (5) als Mobile Virtual Network Operator (5') in einem dritten Mobilfunknetz (5") virtualisiert ist.

## Claims

1. A method for setting up a call from a subscriber (1) having a first caller identification (CLI_{1,j}) to a mobile station (2) to which a first dial number (B) in a first mobile phone network (6) is assigned, **characterised by**:
storing a first association (Z₁) between the first dial number (B) and a second dial number (VBₙ) assigned in a second mobile phone network (5), in a service node (7) of the second mobile phone network (5);
receiving a first call (10) which is directed to the second dial number (VBₙ) and contains the first caller identification (CLI_{1,j}), in the second mobile phone network (5);
if no reserve dial number (Cⱼ) is yet associated with the first caller identification (CLI_{1,j}) in the service node (7), associating a yet unassociated reserve dial number (Cⱼ) from a pool of reserve dial numbers of the second mobile phone network (5) with the first caller identification (CLI_{1,j}) and storing this association as second association (Z₂) to the first association (Z₁) in the service node (7);
generating a second caller identification (CLI₂) comprising the reserve dial number (Cⱼ) associated with the first caller identification (CLI_{1,j});
determining the first dial number (B) associated with the second dial number (VBₙ) from the stored first association (Z₁); and,
setting up a second call (13) from the second mobile phone network (5), or another mobile or fixed phone network (5'"), to the mobile station (2) addressed by the first dial number (B) and connecting the first call (10) to the second call (13), wherein the second caller identification (CLI₂) is transmitted in the second call (13).

2. The method according to claim 1, further comprising:
storing at least one further association (Z₁) between the first dial number (B) and a respective further second dial number (VBₙ) assigned in the second mobile phone network (6), in the service node (7), wherein for each stored first association (Z₁) an association identifier (n) is assigned;
wherein the second caller identification (CLI₂) also comprises the association identifier (n).

3. The method according to claim 1 or 2, **characterized in that** the first call (10) addressed to the second dial number (VBₙ) is detected by means of the network prefix (MN_{VB}) of the second mobile phone network (5) and directed thereto, where it is received at a line (12) of the second mobile phone network (5) and from there is connected to the second call (13).

4. The method according to claim 1 or 2, **characterized in that** the second dial number (VBₙ) is registered in the home location register (11) of the second mobile phone network (5), and **in that** the first call (10) addressed to the second dial number (VBₙ) is directed by means of the home location register (HLR), or information derived therefrom, to the second mobile phone network (5), where it is received at a line (12) of the second mobile phone network (5) and from there is connected to the second call (13).

5. The method according to any one of claims 1 to 4, **characterized in that** the second call (13) is only set up and the first call (10) is only connected when the first caller identification (CLI_{1,j}) is included in an admission list (WLₙ) or not included in a blocking list (BLₙ), the admission list or blocking list, respectively, being stored in the service node (7) with respect to the first dial number (B).

6. The method according to claim 5 in combination with claim 2, **characterized in that** for each second dial number (VBₙ) associated with a first dial number (B) an individual admission or blocking list (WLₙ, BLₙ) is stored in the service node (7), wherein the respective admission or blocking list (WLₙ, BLₙ) to be applied is determined by means of that second dial number (VBₙ) to which the first call (10) is directed.

7. The method according to any one of claims 1 to 6, furthermore for subsequent calling back of the subscriber (1) from the mobile station (2), comprising:
receiving a third call (18) that contains the second caller identification (CLI₂) as destination dial number (MT₃) and the first dial number (B) as third caller identification (CLI₃), in the second mobile phone network (5);
extracting the reserve dial number (Cⱼ) from the destination dial number (MT₃);
determining the first caller identification (CLI_{1,j}) associated with the reserve dial number (Cⱼ) from the stored second association (Z₂) of that first association (Z₁) that contains the first dial number (B);
setting up a fourth call (20) from the second mobile phone network (5), or another mobile or fixed phone network (5'"), to the subscriber (1) addressed by the determined first caller identification (CLI_{1,j}) and connecting the third call (18) to the fourth call (20).

8. The method according to claim 7, furthermore comprising:
determining the second dial number (VBₙ) associated with the first dial number (B) from the first association (Z₁) stored in the service node (7), and generating a fourth caller identification (CLI₄) comprising the determined second dial number (VBₙ);
wherein the fourth caller identification (CLI₄) is transmitted in the fourth call (20).

9. The method according to claim 7 in connection with claim 2,
wherein in the step of extracting also the association identifier (n) is extracted from the destination dial number (MT₃); and,
wherein in the step of generating the fourth caller identification (CLI₄) the second dial number (VBₙ) associated with the first dial number (B) is determined by means of the first association (Z₁) identified by the extracted association identifier (n) .

10. The method according to any one of claims 7 to 9, **characterized in that** the third call (18) directed to the second caller identification (CLI₂) is detected by means of the network prefix (MN_{VB}) of the second mobile network (5) and directed thereto, where it is received at a line (19) of the second mobile phone network (5) and from there is connected to the fourth call (20).

11. The method according to any one of claims 1 to 10, **characterized in that** the second associations (Z₂) stored in the service node (7) for a first association (Z₁) are sent via a data connection (15) to the mobile station (2) and there are stored in a memory (2") of the mobile station (2).

12. The method according to claim 11, furthermore comprising:
extracting the reserve dial number (Cⱼ) from the second caller identification (CLI₂) transmitted in a second call (13), in the mobile station (2);
determining the first caller identification (CLI_{1,j}) associated with the extracted reserve call number (Cⱼ) in a second association from the memory (2"); and,
indicating the first caller identification (CLI_{1,j}) in the mobile station (2).

13. The method according to any one of claims 1 to 12, **characterized in that** the second dial number (VBₙ) was assigned in the second mobile phone network (5).

14. The method according to any one of claims 1 to 12, **characterized in that** the second dial number (VBₙ) was dial number ported from another mobile phone network into the second mobile phone network (5).

15. The method according to any one of claims 1 to 14, **characterized in that** the second mobile phone network (5) is virtualized as a Mobile Virtual Network Operator (5') in a third mobile phone network (5").

## Revendications

1. Procédé d'établissement d'un appel d'un abonné (1) qui a un premier identifiant d'appelant (CLI₁), vers une station mobile (2), à laquelle un premier numéro d'appel (B) est attribué dans un premier réseau de téléphonie mobile (6), **caractérisé par**:
le stockage d'une première attribution (Z₁) entre le premier numéro d'appel (B) et un deuxième numéro d'appel (VBₙ) attribué dans un deuxième réseau radio mobile (5) dans un noeud de service (7) du deuxième réseau radio mobile (5) ;
la réception d'un premier appel (10), lequel est destiné au deuxième numéro d'appel (VBₙ) et qui contient la première identification d'appelant (CLI_{1,j}), dans le deuxième réseau radio mobile (5) ;
dans le cas où encore aucun numéro d'appel de réserve (Cⱼ) n'est attribué à la première identification d'appelant (CLI_{1,j}) dans le noeud de service (7), l'attribution d'un numéro d'appelant de réserve (Cⱼ) non attribué à partir d'un ensemble de numéros d'appelant de réserve du deuxième réseau radio mobile (5) à la première identification d'appelant (CLI_{1,j}) et le stockage de cette attribution en tant que deuxième attribution (Z₂) avec la première attribution (Z₁) dans le noeud de service (7) ;
la génération d'une deuxième identification d'appelant (CLI₂) comprenant le numéro d'appel de réserve (Cⱼ) attribué à la première identification d'appelant (CLI_{1,j}) ;
la détermination du premier numéro d'appel (B) attribué au deuxième numéro d'appel (VBₙ) à partir de la première attribution (Z₁) stockée ; et
l'établissement d'un deuxième appel (13) à partir du deuxième réseau radio mobile (5) ou d'un autre réseau radio mobile ou fixe (5''') vers la station mobile (2) qui a été adressée par le premier numéro d'appel (B) et la commutation du premier appel (10) vers le deuxième appel (13), où la deuxième identification d'appelant (CLI₂) est transmise conjointement dans le deuxième appel (13).

2. Procédé selon la revendication 1, comprenant en outre :
le stockage d'au moins une autre première attribution (Z₁) entre respectivement le premier numéro d'appel (B) et un autre deuxième numéro d'appel (VBₙ) attribué dans le deuxième réseau radio mobile (6) dans le noeud de service (7), où, pour chaque première attribution (Z₁) stockée, une identification d'attribution (n) est délivrée ;
où la deuxième identification d'appelant (CLI₂) comprend également l'identification d'attribution (n).

3. Procédé selon la revendication 1 ou 2, **caractérisé en ce que** le premier appel (10) adressé au deuxième numéro d'appel (VBₙ) est reconnu à l'aide de l'indicatif de réseau (MN_{VB}) du deuxième réseau radio mobile (5) et est dirigé vers celui-ci où il est alors réceptionné au niveau d'une connexion (12) du deuxième réseau radio mobile (5) et commuté sur le deuxième appel (13) à partir de là.

4. Procédé selon la revendication 1 ou 2, **caractérisé en ce que** le deuxième numéro d'appel (VBₙ) est enregistré dans l'annuaire local (HLR) du deuxième réseau radio mobile (5) et le premier appel (10) adressé au deuxième numéro d'appel (VBn) est transmis à l'aide de l'annuaire local (HLR) ou d'informations en étant dérivées vers le deuxième réseau radio mobile (5), où il réceptionné au niveau d'une connexion (12) du deuxième réseau radio mobile (5) et est commuté vers le deuxième appel (13) à partir de là.

5. Procédé selon l'une des revendications 1 à 4, **caractérisé en ce que** le deuxième appel (13) n'est établi et le premier appel (10) n'est commuté que si la première identification d'appelant (CLI_{1,j}) est contenue dans une liste d'autorisation (WLₙ) ou n'est pas contenue dans une liste noire (BLₙ), qui est stockée dans le noeud de service (7) pour le premier numéro d'appel (B).

6. Procédé selon la revendication 5 en combination avec la revendication 2, **caractérisé en ce que**, pour chacun des deuxièmes numéros d'appel (VBₙ) attribué au premier numéro d'appel (B), une liste d'autorisation ou une liste noire (WLₙ, BLₙ) individuelle est stockée, où la liste d'autorisation ou liste noire (WLₙ, BLₙ) à employer respectivement est déterminée à l'aide du deuxième numéro d'appel (VBₙ) auquel est adressé le premier appel (10).

7. Procédé selon l'une des revendications 1 à 6, prévu en outre pour un rappel consécutif de l'abonné (1) à partir de la station mobile (2), comprenant :
la réception d'un troisième appel (18) lequel contient la deuxième identification d'appelant (CLI₂) en tant que numéro d'appel cible (MT₃) et le premier numéro d'appel (B) en tant que troisième identification d'appelant (CLI₃), dans le deuxième réseau radio mobile (5) ;
l'extraction du numéro d'appel de réserve (Cⱼ) à partir du numéro d'appel cible (MT₃) ;
la détermination de la première identification d'appelant (CLI_{1,j}) attribuée au numéro d'appel de réserve (Cⱼ) à partir de la deuxième attribution (Z₂) stockée de cette première attribution (Z₁) laquelle contient le premier numéro d'appel (B) ;
l'établissement d'un quatrième appel (20) à partir du deuxième réseau radio mobile (5) ou d'un autre réseau radio mobile ou fixe (5) vers l'abonné (1) qui a été adressé par la première identification d'appelant (CLI_{1,j}) déterminée et la commutation du troisième appel (18) vers le quatrième appel (20).

8. Procédé selon la revendication 7, comprenant en outre :
la détermination du deuxième numéro d'appel (VBₙ) attribuée au premier numéro d'appel (B) à partir de la première attribution (Z₁) stockée dans le noeud de service (7), et la génération d'une quatrième identification d'appelant (CLI₄) comprenant le deuxième numéro d'appel (VBₙ) déterminé ;
où la quatrième identification d'appelant (CLI₄) est transmise conjointement dans le quatrième appel (20).

9. Procédé selon la revendication 7 en combination avec la revendication 2,
où, lors de l'extraction, l'identification d'attribution (n) est également extraite à partir du numéro d'appel cible (MT₃) ; et
où, lors de la génération de la quatrième identification d'appelant (CLI₄), le deuxième numéro d'appel (VBₙ) attribuée au premier numéro d'appel (B) est déterminé à l'aide de la première attribution (Z₁) indiquée par l'identification d'attribution (n) extraite.

10. Procédé selon l'une des revendications 7 à 9, **caractérisé en ce que** le troisième appel (18) adressé à la deuxième identification d'appelant (CLI₂) est reconnu à l'aide de l'indicatif de réseau (MN_{VB}) du deuxième réseau radio mobile (5) et est transmis vers celui-ci où il est réceptionné au niveau d'une connexion (19) du deuxième réseau radio mobile (5) et est commuté vers le quatrième appel (20) à partir de là.

11. Procédé selon l'une des revendications 1 à 10, **caractérisé en ce que**, dans le noeud de service (7), des deuxièmes attributions (Z₂) stockées pour une première attribution (Z₁) sont envoyées vers la station mobile (2) par le biais d'une connexion de données (15) et y sont stockées dans une mémoire (2") de la station mobile (2).

12. Procédé selon la revendication 11, comprenant en outre :
l'extraction du numéro d'appel de réserve (Cⱼ) à partir de la deuxième identification d'appelant (CLI₂) transmise dans un deuxième appel (13) dans la station mobile (2) ;
la détermination de la première identification d'appelant (CLI_{1,j}) attribuée au numéro d'appel de réserve (Cⱼ) extrait dans une deuxième attribution (Z₂) à partir de la mémoire (2") ; et
l'indication de la première identification d'appelant (CLI_{1,j}) dans la station mobile (2).

13. Procédé selon l'une des revendications 1 à 12, **caractérisé en ce que** le deuxième numéro d'appel (VBₙ) a été attribué dans le deuxième réseau radio mobile (5).

14. Procédé selon l'une des revendications 1 à 12, **caractérisé en ce que** le deuxième numéro d'appel (VBₙ) a été porté en numéro d'un autre réseau radio mobile dans le deuxième réseau radio mobile (5).

15. Procédé selon l'une des revendications 1 à 14, **caractérisé en ce que** le deuxième réseau radio mobile (5) est rendu virtuel en tant qu'opérateur de réseau virtuel mobile (5') dans un troisième réseau radio mobile (5'").
